Europäisches Patentamt

European Patent Office

Office européen des brevets

(11) Publication number: **0 117 887**
**A2**

(12) **EUROPEAN PATENT APPLICATION**

(21) Application number: **83102323.9**

(22) Date of filing: **09.03.83**

(51) Int. Cl.³: **F 16 T 1/00**

(30) Priority: **08.02.83 DK 533/83**

(43) Date of publication of application:
**12.09.84 Bulletin 84/37**

(84) Designated Contracting States:
**AT BE CH DE FR GB IT LI LU NL SE**

(71) Applicant: **P. GRANZOW Aps**
**Bolbrovaenge 29**
**DK-2960 Rungsted Kyst(DK)**

(72) Inventor: **Hansen, Lars**
**2412 Houston Branch Rd. Mathews**
**Charlotte, N.C. 28105(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) A solenoid-actuated valve unit for discharging condensed liquid from a compresser gas system.

(57) A solenoid-actuated valve unit for discharging condensed liquid from a compressed gas or air system at predeter- mined time intervals comprises a liquid discharge valve and a solenoid for operating the same. The function of the solenoid is controlled by an electronic timer circuit, which is arranged within the same housing as the solenoid. Prefer- ably, the solenoid housing comprises a removable cover, and the electronic timer circuit may then be fastened to the inner side surface of the cover.

Fig. 2.

EP 0 117 887 A2

The present invention relates to a solenoid-actuated valve unit for discharging condensed liquid from a compressed gas system at predetermined time intervals. As an example, in compressed air systems, in which air from the ambient atmosphere containing a percentage of water vapour, is compressed, it is normally desired to remove at least part of the water vapour from the compressed air. Therefore, the compressed air may pass a cooling system, in which part of the water vapour is condensed and passed to a liquid drain for intermittently discharging condensed water and possible other liquid substances, such as suspended oil droplets or the like, from the compressed air system. Such drain may be controlled by an automatic valve unit as that mentioned above.

It is known to discharge condensed water from a compressed air system at predetermined time intervals by means of a solenoid-actuated valve unit, which is controlled by means of a separate timer unit. The timer unit is electrically connected to the solenoid of the valve unit, which is adapted to open the water discharge valve of the valve unit for a short period of time at predetermined time intervals. The timer unit comprises a pair of partly overlapping, mutually adjustable cams which activate a turn on/turn off switch. The length of the time period, in which the water discharge valve is opened, may be adjusted by adjusting the mutual position of the partly overlapping cams, while the length of the time intervals between the valve opening periods may be adjusted by changing the rotational speed of the cams. Thus, in the known compressed air systems automatic discharge of condensed water and/or oil involves the use of a solenoid-actuated valve unit and a separate cam-operated timer unit, which is electrically connected to the solenoid of the valve.

The present invention provides a single unit by means of which condensed liquid may automatically be discharged from a compressed gas system, such as a compressed air system, at predetermined time intervals.

Thus, the present invention provides a solenoid-actuated valve unit for discharging condensed liquid from a compressed gas system at predetermined time intervals, said valve unit comprising: a discharge valve including a valve body, a solenoid having an armature connected to the valve body for moving the valve body between open and closed positions, an electronic timer circuit for energizing the solenoid for a short time period at predetermined time intervals, and a housing containing the solenoid as well as the timer circuit.

Even though it is obviously advantageous to arrange the timer and the solenoid within the same housing, this means a striking rupture with the prior art, according to which two separate units interconnected by electrical cables are used.

The electronic timer circuit is preferably of a type requiring a small space only in the common housing. Thus, the electronic timer circuit preferably includes a printed circuit board. The timer circuit may then be accomodated within the housing of a universal or multipurpose solenoid-operated valve unit. Such universal, generally available, solenoid-actuated valve unit may then rather simply be modified so as to be in accordance with the present invention, namely by accomodating an electronic timer circuit within the existing housing of the solenoid, and by electrically connecting the timer circuit to the solenoid.

In a preferred embodiment of the valve unit according to the invention the solenoid housing includes a removable cover or lid, and the timer circuit is fastened to the inner side thereof. The timer circuit may then be removed together with the removable cover or lid, which is advantageous in case of replacement or repair of the timer circuit. Furthermore, a conventional, universal solenoid-actuated valve unit comprising a solenoid housing having such a cover or lid may be modified so as to be in accordance with the present invention by replacing the original cover or lid by a corresponding cover or lid provided with a suitable electronic timer circuit, and by electrically connecting the timer circuit to the solenoid.

The timer circuit may include an RC-network defining the time interval at which the solenoid-operated valve is opened. In order to render possible the carrying out of an adjustment of the time interval, the RC-network may include a variable resistor and a rotatable knob for adjustment of the variable resistor may then be arranged on the outer side of the lid, whereby the adjustment of the predetermined time interval is highly facilitated.

The timer circuit may also include an adjustable electronic element for varying the short period in which the solenoid is energized so as to open the liquid discharge valve. The variation of this period is less important than the variations of the time intervals between the liquid discharge periods. Therefore, this adjustable electronic element may be less accessible, so that it may be necessary to remove the cover or lid in order to adjust this time period. Thus, the adjustable electronic element may be a trimming potentiometer, a trimming condenser, or a trimming coil, preferably a trimming potentiometer of an RC-network.

The discharge valve body may cooperate with a valve seat formed within a valve housing which may be an integral part of the housing common to the solenoid and the timer circuit. Alternatively, the valve seat may be formed within a separate valve housing or valve block, which is removably fastened to the solenoid housing, whereby the valve housing and the valve body arranged therein may be replaced.

The invention will now be further described with reference to the drawings, wherein
Fig. 1 is a perspective view of an embodiment of a solenoid-actuated valve unit according to the invention,
Fig. 2 is a perspective exploded view of the valve unit shown in Fig. 1,
Fig. 3 is a perspective view of a preferred embodiment of a part of the solenoid-actuated valve unit according to the invention,
Fig. 4 is a diagram illustrating an automatic operating system for discharging condensed water from a compressed air system and including a valve unit as that shown in Figs. 1 - 3, and
Fig. 5 is a diagram illustrating an embodiment of an electronic timer circuit included in the valve unit of Figs. 1 -3.

P&V F3248jA, KEV/IPb, 1983 02 08

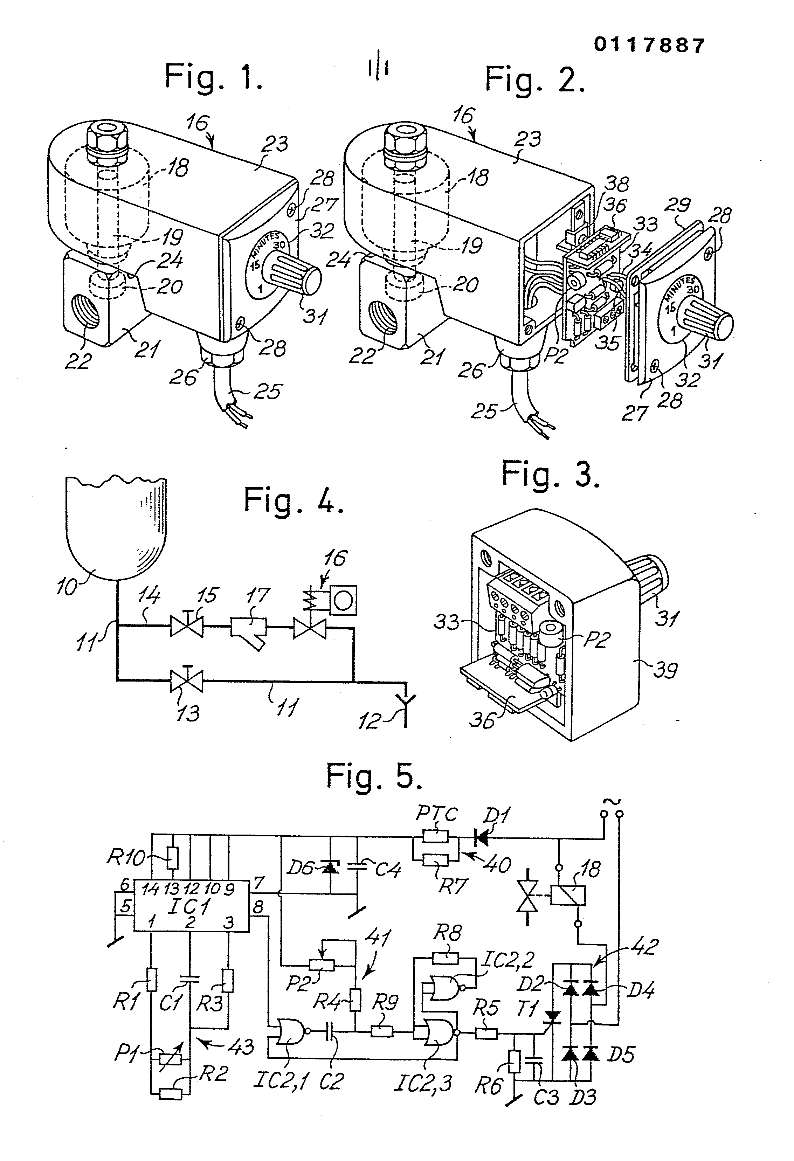

Fig. 4 diagrammatically illustrates part of a compressed-air system comprising a compressed-air tank 10 with a discharge conduit 11 for discharging condensed water from the tank 10 to a drain 12. The discharge conduit 11 contains a manually operable shut-off valve 13, which is normally closed. The shut-off valve 13 is bypassed by a bypass conduit 14, which also contains a manually operable shut-off valve 15. However, the valve 15 is normally open. A solenoid-operated valve unit 16 controlling the bypass conduit 14 is arranged downstream of the shut-off valve 15, and a separator 17 for separating sludge, oxide scales, and other solid matter from the condensed water to be discharged, is inserted in the bypass conduit 14 between the valve 15 and the valve unit 16. The purpose of the separator 17 is to retain solid matter which might cause malfunction of the solenoid-operated valve unit 16.

Figs. 1 and 2 show an embodiment of the solenoid-operated valve unit 16 more in detail. The valve unit 16 comprises a solenoid coil 18 having an armature 19, which is connected to a valve body 20, which may be moved between open and closed positions by means of the solenoid 18. The valve body 20 is mounted within a valve housing or block 21 having a through bore 22 forming part of the bypass conduit 14. The valve body 20 which may, for example, be a so-called puppet valve, cooperates with a valve seat (not shown) in such a manner that the bore 22 is opened and closed, when the valve body 20 is in its open and closed positions, respectively. The solenoid coil 18 and armature 19 are mounted within a solenoid housing 23. The valve block 21 may, for example, be made from stainless steel, and is fastened to the solenoid housing 23 so that an outer surface of the block 21 is in tight engagement with an adjacent outer surface part 24 of the solenoid housing 23. The solenoid armature 19 extends through an opening in the surface part 24 into an aligned bore in the valve block 21 extending transversely to the transverse bore 22. An electrical cable 25 for supplying energizing electrical current to the solenoid coil 18 extends into the housing through a cable gand 26. At one end the solenoid housing 23 is closed by means of a cover or lid 27, which is removably fastened to the housing 23 by means of screws 28, and a sealing gasket 29 is arranged between the housing 23 and the cover 27. Within the housing 23, an earthing terminal 38 is arranged. The housing 23 and the cover 27 may, for example, be moulded from a plastic material, such as polyamide.

As far as described up till now the valve unit shown in Figs. 1 and 2 is of a generally available type, which is marketed by Sperry Vickers Lucifer S.A., Carouge-Geneva, Switzerland. However, according to the present invention this generally known valve unit has been modified by arranging an electronic timer circuit for controlling the function of the solenoid valve 18, 19 within the solenoid housing 23.

In Fig. 3, a preferred embodiment of a removable cover 39 for the above described solenoid-actuated valve unit is shown. The electronic timer circuit preferably includes a printed circuit board 33 which is arranged within the cover 39 and fastened thereto by means of screws (not shown). By arranging the electronic timer circuit on a printed circuit board within the removable cover 39, the electronic timer circuit may very easily be removed from the housing, whereby replacement and repair of the timer circuit may be facilitated. In the embodiment shown in Fig. 2, the electronic timer circuit included on the printed circuit board 33 is also preferably fastened to the lid or cover 27. The electronic timer circuit furthermore includes a variable element e.g. a resistor, capacitor, or coil, which is adapted to cooperate with a rotatable knob 31 for adjustment of the time interval at which the solenoid coil 18 should be energized so as to move the valve body 20 to its open position. The knob 31 is preferably adapted to cooperate with a scale 32 having appropriate scale markings. The electronic timer circuit included on the printed circuit board 33 is, as best shown in Fig. 2, through conductors 34, 35 connected to a solenoid coil circuit arranged within the housing 23. Apart from the solenoid coil, the above described generally available valve unit also includes a rectifier comprising one or more silicon diodes, an overload protection fuse, and an RC-protection circuit incapsulated within the housing 23.

As is evident from Figs. 2 and 3, some the components of the electronic timer circuit are arranged on a thick film substrate 36.

P&V F3248jA, KEV/IPb, 1983 02 08

6                                    0117887

In Fig. 5 a block diagram of a preferred embodiment of the electronic circuit of a solenoid-actuated valve unit according to the invention is shown. The circuit is AC mains-supplied and basically comprises four parts: a DC-supply 40, an oscillator/timer circuit IC1, a NOR-gate circuit 41, and a thyristor/rectifier unit 42.

The DC-supply 40 comprises a rectifier diode D1 connected in series with two resistors PTC, R7, respectively, connected in parallel, and a Zener-diode D6 connected in parallel with a storage capacitor C4. By employing the resistor PTC which is a resistor having a positive temperature coefficient, the entire electronic circuit may be directly connected to the AC mains having a voltage in the range of 110 V - 240 V, since the value of the PTC-resistor increases considerably when exposed to an increased potential so that the current of the PTC-resistor does not increase in direct proportion to the increase of the voltage. The output from the DC-supply 40 delivered from the capacitor C4 and the Zener-diode D6 is supplied to the oscillator/timer circuit IC1. The circuit IC1, which preferably is a CMOS circuit, is provided with an internal oscillator the frequency of which is determined by means of a first RC-network 43 defining a first time constant. The RC-network 43 includes a resistor R1, a resistor R2, a resistor R3, a capacitor C1, and a potentiometer P1 which in the above embodiment is connected to the rotatable knob 31 and, thus, serves the purpose of adjustment of the time interval at which the solenoid coil 18 is energized.

The NOR-gate circuit 41 comprises three NOR-gates (IC2,1; IC2,2; IC2,3), two resistors R8 , R9, and an coupling capacitor C2 together with a series connection of a resistor R4 and a second potentiometer P2 constituting a second RC-network defining a second time constant. This second time constant is identical to the energizing time interval of the solenoid coil 18. After the timer of the oscillator/timer circuit IC1 has counted a predetermined number of internally generated pulses, the output of the circuit IC1 goes high shifting the output of the circuit 41 from low to high. The output of the circuit 41 remains high until the coupling capacitor C2 of the circuit has been charged through the series connection of the resistor R4and the potentiometer P2.

P&V F3248jA, KEV/IPb, 1983 02 08

The output of the circuit 41 is connected to the thyristor/ rectifier circuit 42. The circuit 42 includes a thyristor T1 and a four diode, full-wave rectifier D2, D3, D4, D5. The gate of the thyristor T1 is through a resistor R5 connected to the output of the circuit 41. Furthermore, the gate of the thyristor T1 is through a parallel connection of a resistor R6 and a capacitor C3 connected to the earth of the entire circuit. When the output of the circuit 41 is high, the thyristor T1 is turned on thus providing a current path between the two halves D2, D4 and D3, D5, respectively, of the full-wave rectifier which is connected in series with the solenoid coil 18.

In a plant or system as that shown in Fig. 4, condensed water may be automatically discharged at desired time intervals. Thus, for example, the electronic timer circuit may be set so as to energize the solenoid coil and, consequently, open the water discharge valve for a period of three seconds every thirty minutes. When the valve body 20 is opened, pressurized air from the tank 10 may escape through the bypass conduit 14, whereby possible condensed water collected in the bypass conduit is blown out from the conduit into the drain 12.

It is understood that various changes of the embodiment described above may be made within the scope of the present invention. Thus, in Fig. 2, the printed circuit board of the electronic timer circuit may alternatively be fixedly mounted within the housing 23.

P&V F3248jA, KEV/IPb, 1983 02 08

CLAIMS

1. A solenoid-actuated valve unit for discharging condensed liquid from a compressed gas system at predetermined time intervals, said valve unit comprising

a discharge valve including a valve body,

a solenoid having an armature connected to the valve body for moving the valve body between open and closed positions,

an electronic timer circuit for energizing the solenoid for a short time period at predetermined time intervals, and

a housing containing the solenoid as well as the timer circuit.

2. A valve unit according to claim 1, wherein the electronic timer circuit includes a printed circuit board.

3. A valve unit according to claim 1 or two, wherein the solenoid housing includes a removable cover, the timer circuit being fastened to an inner side surface thereof.

4. A valve unit according to claim 3, wherein the timer circuit includes an RC-network.

5. A valve unit according to claim 4, wherein the RC-network includes a variable resistor, a rotatable knob for adjustment of the variable resistor being arranged on an outer side surface of the cover.

6. A valve unit according to claim 3, wherein the timer circuit includes an adjustable electronic element for varying the said short period in which the solenoid is energized.

7. A valve unit according to claim 3, wherein the discharge valve comprises a valve block fastened to the solenoid housing and defining a liquid discharge passage therein, the valve body being arranged within the valve block movable between its closed position in which the discharge passage is closed, and its open position in which the discharge passage is open to allow discharge of condensed liquid from the compressed gas system.

P&V F3248jA, KEV/lPb, 1983 02 08

8. In a solenoid-actuated valve unit for discharging condensed liquid from a compressed gas system at predetermined time intervals and comprising a liquid discharge valve, a solenoid arranged within a housing for moving the valve between open and closed positions, a timer for energizing the solenoid for a short time period at predetermined time intervals, the improvement consisting in that the timer is an electronic timer circuit which is arranged within the solenoid housing.

9. A valve unit according to claim 8, wherein the electronic timer circuit includes a printed circuit board.

10. A valve unit according to claim 8 or 9, wherein the solenoid housing includes a removable cover, the timer circuit being fastened to an inner side surface thereof.

11. A valve unit according to claim 10, wherein the timer circuit includes a variable electronic element for varying the said time intervals, a rotatable knob for adjustment of the variable element being arranged on an outer side surface of the cover.

12. A valve unit according to claim 10, wherein the timer circuit includes an adjustable electronic element for varying the said short period in which the solenoid is energized.

13. A removable cover for a housing for a solenoid-actuated valve unit for discharging condensed liquid from a compressed gas system at predetermined time intervals, said unit comprising a liquid discharge valve, and a solenoid arranged within said housing for moving the valve between open and closed positions, an electronic timer circuit, which is arranged within and fastened to the cover and being adapted to energize the solenoid for a short time period at predetermined time intervals.

14. A cover according to claim 14, wherein the electronic timer circuit includes a printed circuit board.

P&V F3248jA, KEV/IPb, 1983 02 08

Fig. 1.

Fig. 2.

0117887

Fig. 4.

Fig. 3.

Fig. 5.